# EUROPEAN PATENT SPECIFICATION

(11) **EP 0 471 722 B1**
(45) Date of publication and mention of the grant of the patent: **16.03.1994**
(21) Application number: 90907195.3
(22) Date of filing: 10.05.1990
(51) Int. Cl.: F16G 13/10

(54) **TRANSMISSION SYSTEM, IN PARTICULAR BALL LINK TRANSMISSION SYSTEM**
ÜBERTRAGUNGSSYSTEM, INSBESONDERE ÜBERTRAGUNGSSYSTEM MIT KUGELN
SYSTEME DE TRANSMISSION, NOTAMMENT SYSTEME DE TRANSMISSION A BILLES

(30) Priority: 12.05.1989 DK 2317/89
(43) Date of publication of application: 26.02.1992
(73) Proprietor: JENSEN, Neil Johan, DK-6600 Vejen (DK)
(72) Inventor: JENSEN, Neil Johan, DK-6600 Vejen (DK)
(74) Representative: Gregersen, Niels Henrik
(86) International application number: DK9000120
(87) International publication number: WO9013759

(56) References cited:
- US-A- 3 494 214

## Description

The present invention relates to a ball link transmission system of the kind presented in the introductory part of claim 1.

From the disclosure of US 3 494 214 a ball link transmission system of this kind is known wherein hollow spherically shaped link members are intended to be assembled around opposite end parts of stiff linking rods in such a way that the linking rods can swing in relation to the hollow link members which may consist of plastics material and may be produced by successively welding together hemispherically shaped, hollow link members. However, one or more of the link members have to be made from separate parts in order to make is possible to assemble an endless chain system - and consequently special provisions such as retaining ring means and corresponding peripheral grooves have to be present for interconnecting the two cup portions.

The purpose of the invention is to provide an improved ball link transmission system of the kind presented initially, and by means of which a very significant facilitation in production and assembly and an improved efficiency may be achieved, such that widespread acceptance may be expected.

The ball link transmission system according to the invention is distinctive in that the hollow link members prior to the welding have been pivotably connected to said linking rods by means of locking pin means cooperating with bearing means, and that at least one of said hemispherically shaped link members being formed with a side opening. Thus a very significant facilitation in production and assembly of transmission systems of the present kind can be achieved as well as an improved efficiency, good flexibility, low weight and a very low noise level which can be reduced further if the driving and/or reversing wheels are also made from plastics material, possibly encompassing a significant advantage seen from an industrial-environment point of view.

Appropriately the ball link transmission system according to the invention is arranged such that opposite a central opening for said linking rods said hemispherically shaped, hollow link members are formed with a circumferential, protruding flanged edge which is recessed from the outside of the hemispherical shell, and which preferably is flush with the inside of the hemispherical shell, the flanged edge being intended for melting down when welding together two hemispherically shaped link members by means of a heated welding plate. And preferably the said linking rods consist of plastics material, steel or possibly sintered metal, and preferably they are shaped as straight cylindrical linking rods which are formed, near opposite end parts thereof, with transverse cylindrical bores which preferably are mutually parallel.

The locking pin means preferably consist of locking pins of steel; but the locking pins may also be made from plastics material or possibly sintered metal. Preferably the locking means are formed as straight cylindrical locking pins.

The bearing means mentioned preferably consist of steel; but the bearing means may also be made from plastics material or possibly sintered metal. Expediently the bearing means are shaped with an outer spherical surface which fits inside the spherically shaped link members, with a central bore formed in the spherical surface which fits the said linking rods and with a transverse recess for the said locking means, formed at a back side in relation to the bore.

In other words, the individual parts of the transmission system according to the invention as mentioned may be manufactured from suitable materials - adapted for the intended application - and if certain parts are made from sintered metal these parts may additionally be treated with a bactericidal agent which may be "absorbed" in the porous sintered metal or possibly in a correspondingly porous plastics material. Alternatively the transmission system ac cording to the invention may - regardless of the actual choice of materials comprise a station through which the endless chain is led, and wherein cleansing and/or preparation with a suitable cleaning agent or a bactericidal agent may occur continually.

To achieve a self-lubricating effect the said bearing means may, in particular if they are made of sintered metal or porous plastics material, advantageously be prepared with a suitable lubricating agent which is "absorbed" in the actual porous material.

The invention will be more closely explained in the following with reference to the drawing, wherein:-
Fig. 1 is a part sectional view of a driving wheel or a reversing wheel with a ball link chain as according to the invention,
Fig. 2 and 3 serve to illustrate different possible track layouts in a transmission system according to the invention,
Fig. 4 is a side view - part sectional - of an embodiment of a ball link chain for the transmission system according to the invention,
Fig. 5 is a plane end view of a ball link part - as shown at the left side of Fig. 4 and seen from the line V-V, while
Fig. 6 and 7 are side views - part sectional - for illustrating how a ball link chain for the transmission system according to the invention is disassembled and assempled, respectively.

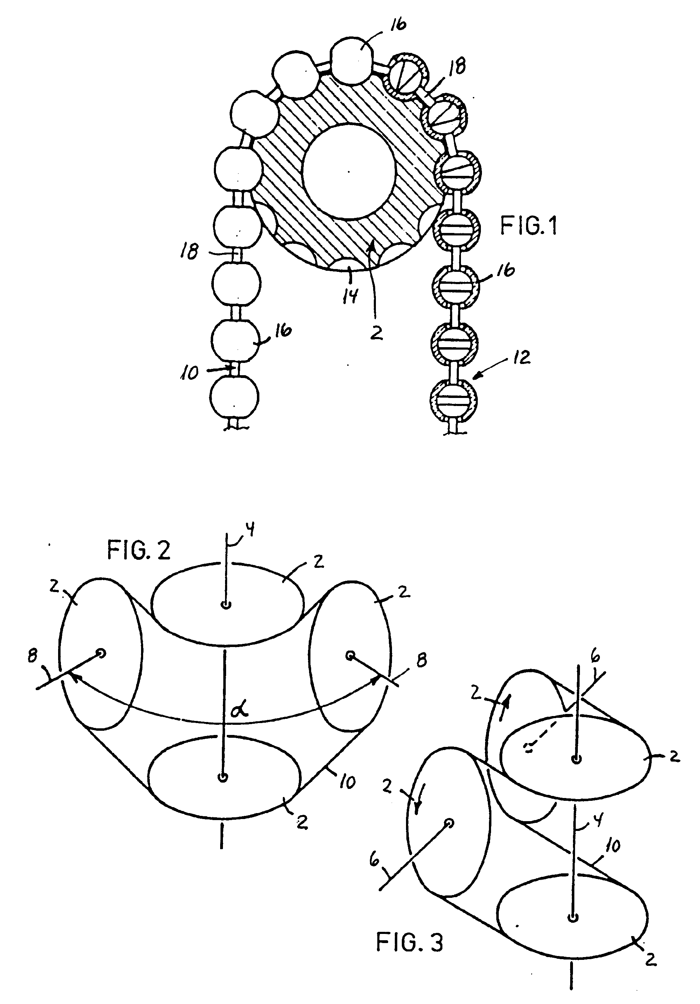

Figures 1 - 3 show the transmission principle according to the invention wherein a number of driving wheels and/or reversing wheels 2 as needed can be rotatably journaled on a vertical axis 4 and on a horizontal axis 6 or possibly on two horizontal axes 8 which are inclined at an angle α in relation to each other, that is, wherein an endless track 10 of a ball link chain 12 may have a complex path through the planes shown, which may not be taken, however, as a limitation for a possibly different track layout.

The driving wheels and/or the reversing wheels 2 are formed with a peripheral circle of concave depressions 14 shaped like a hemisphere or with a depth a little smaller than corresponding to the radius of hollow ball links 16, and such that between the depressions 14 there is room for stiff linking rods 18 which extend between the individual ball links 16, and which are pivotably embedded in the hollow ball links 16 at opposite end parts.

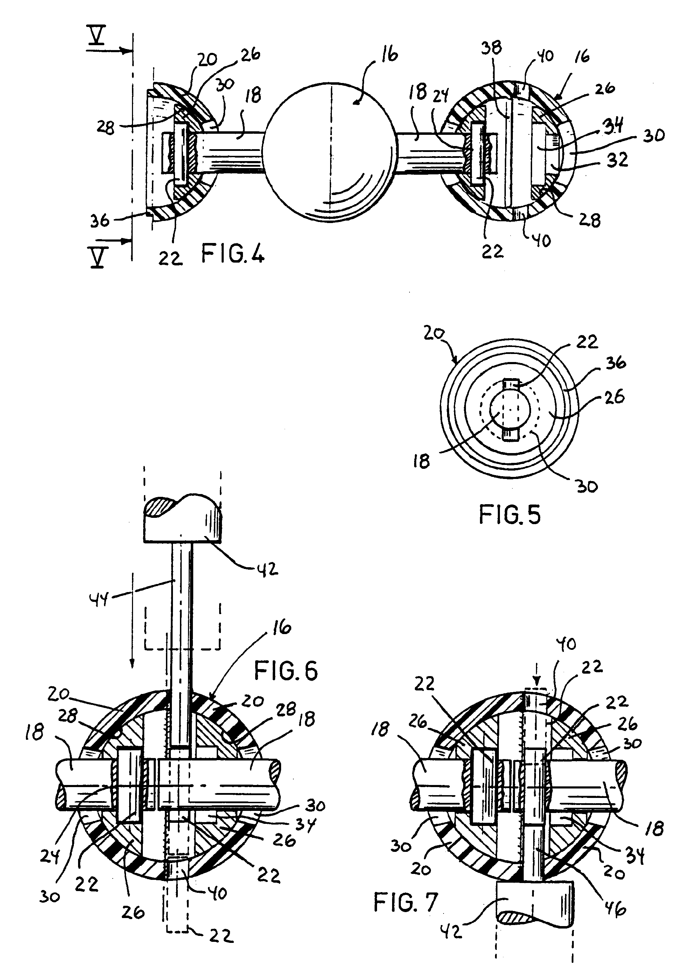

In Fig. 4 and 5 the construction of the ball link chain 10 is shown in detail, with the ball link 16 shown rightmost in Fig. 4 representing a first or last ball link 16 of the ball link chain 10. The latter is produced - as mentioned initially - by successively welding together hemispherically shaped, hollow link members 20 - as shown leftmost in Fig. 4 and in Fig. 5 which prior to welding have been pivotably connected with the linking rods 18, by means of locking pins 22 in a transverse bore 24 at an end part of the linking rods and by bearing parts 26 having an outer spherical surface portion 28 fitting inside around circular wall openings 30 in the hemispherically shaped, hollow link members 20, and which opposite the spherical surface portion 28 are shaped with a recess or depression running in transverse to a central bore 32, into which recess the locking pin 22 fits in such a way that it is held in place in the recess 34 if the ball link chain 10 is tightened, that is, when the spherical surface portions 28 of the bearing parts 26 are pressed against the inner wall of the ball links 26 by means of a pulling force at the linking rods 18.

At its free edge portion the hemispherical link member 20 is formed with a protruding ring-shaped flange 36 which is recessed in relation to the outside of the hemispherical shell of the link member, and which is flush with the inside of the link member 20. The ring-shaped flange 36 is intended for melting down when welding together two similar link members 20 by means of a heated welding plate, such that the weld at the outer side of the ball link 16 becomes flush with the outer spherical surface thereof while at the inner side of the ball link 16 a slightly protruding, circumferential welding bead 38 as shown rightmost in Fig. 4 turns up. In the same figure which may represent, as mentioned earlier, a first or last link of the ball link chain 10, it is shown that the ball link 16 is formed with two diametrical side openings 40 which, as shown in detail in Fig. 6 and 7, are intended for use when disassembling and assembling the ball link chain 10, which can be assembled by pressing out or introducing, respectively, a locking pin 22 through the side openings 40 by means of an auxiliary tool 42 which has a long pin 44 at one end and which has a short pin 46 at the opposite end.

Thus fig. 6 shows the dismounting or separation of the first and last link of an endless ball link chain 10 wherein the subject ball link 16 is placed on a suitable support (for example clamped in a vise) and the rightmost linking rod 18 is pressed inward until the locking pin 22 is released from the recess 34 and is placed abreast of the side openings 40.By introducing the long pin 44 through the upper side opening 40 the locking pin 22 is easily pushed out of the bore 22 and removed through the lower side opening 40. When assembling the ball link chain 10 a locking pin 22 is introduced through the upper side opening and pushed into the bore 24while the short pin 46 is used for placing the locking pin 22 correctly in the bore 24 in such a way that the locking pin 22 faces the recess 34 in the bearing part 26, the linking rod likewise being inserted through the bore 32 in the bearing part 26 by introduction through the opening 30. The locking pin 22 normally consists of a simple solid steel pin; but possibly it may be replaced by a so-called tubular pin of spring steel.

The hollow ball links 16 are preferably produced by injection moulding a suitable plastics material; the linking rods 18 are preferably of steel - possibly stainless steel, but they may also be manufactured from sintered metal. The linking parts 26 may consist of a suitable plastics material with an appropriately low coefficient of friction on the plastics material from which the ball link 16 is made; but the link parts 26 may also with some advantage be made from sintered metal with a good porosity which can absorb a suitable amount of a lubricant, a cleaning agent or a bactericidal agent such that the ball link chain 10 may be self-lubricating and/or self-cleaning.

## Claims

1. A ball link transmission system comprising one or more driving and/or reversing wheels (2) with a peripheral circle of concave recesses (14) which mainly have the shape of hemispheres, and cooperating therewith an endless chain (12) of hollow, spherically shaped link members (16) of plastics material being produced by successively welding together hemispherically shaped, hollow link members (20) and being individually connected by means of linking rods (18), opposite end parts of which are pivotably embedded in the hollow link members (16), **characterized** in that the hollow link members (20) prior to welding have been pivotably connected to said linking rods (18) by means of locking pin means (22) cooperating with bearing means (26), and that at least one of the said hemispherically shaped link members (20) being formed with a side opening (40).

2. Transmission system according to claim 1, **characterized** in that opposite a central opening (30) for said linking rods (18) said hemispherically shaped, hollow link members (20) are formed with a circumferential, protruding flanged edge (36) which is recessed from the outside of the hemispherical shell, and which preferably is flush with the inside of the hemispherical shell, the flanged edge being intended for melting down when welding together two hemispherically shaped link members (20) by means of a heated welding plate.

3. Transmission system according to claim 1, **characterized** in that said linking rods consist of plastics material, steel or possibly sintered metal and preferably are shaped as straight cylindrical linking rods (18), opposite end parts of which are formed with transverse cylindrical bores (24) which preferably are mutually parallel.

4. Transmission system according to claim 1, **characterized** in that said locking pin means consist of plastics material, steel or possibly sintered metal and preferably are formed as straight cylindrical locking pins (22).

5. Transmission system according to claim 1, **characterized** in that said bearing means (26) consist of plastics material, steel or possibly sintered metal and are shaped with an outer spherical surface (28) which fits inside the spherically shaped link members (20), with a central bore (32) formed in the spherical surface (28) which fits the said linking rods (18) and with a transverse recess (34) for the said locking pin means (22), formed at a back side in relation to the bore (32).

## Patentansprüche

1. Kugelgelenkverbindungs-Übertragungssystem mit einem oder mehreren Antriebs- und/oder Wenderädern (2) mit einem Umfangs-Kreis konkaver Ausnehmungen (14), die im wesentlichen die Form von Hemispheren aufweisen, die mit einer Endloskette (12) aus hohlen sphärisch geformten Verbindungsgliedern (16) aus Kunststoffmaterial zusammenwirken, die durch aufeinander folgendes Verschweißen hemisphärisch geformter, hohler Verbindungsglieder (20) gebildet sind und die individuell durch Verbindungsstangen (18) miteinander verbunden sind, wobei deren gegenüberliegende Endbereiche gelenkig in die hohlen Verbindungsglieder (16) eingebettet sind, dadurch gekennzeichnet, daß die hohlen Verbindungsglieder (20), bevor sie verschweißt werden, durch Schließstife (22) gelenkig mit den Verbindungsstangen (18), die mit Lagern (26) zusammenwirken, verbunden werden, und daß mindestens eines der hemisphärisch geformten Verbindungsglieder (20) mit einer Seitenöffnung (40) versehen ist.

2. Übertragungssystem nach Anspruch 1, dadurch gekennzeichnet, daß gegenüber einer zentralen Öffnung (30) für die Verbindungsstangen (18) die hemisphärisch geformten, hohlen Verbindungsglieder (20) mit einer umlaufenden, vorstehenden Flanschkante (36) versehen sind, die von dem Äußeren der hemisphärischen Schale zurückspringt und die vorzugsweise in einer Ebene mit der Innenseite der hemisphärischen Schale liegt, wobei die Flanschkante schmelzen soll, wenn zwei hemisphärisch ausgebildete Verbindungsglieder (20) durch eine erhitzte Schweißplatte verschweißt werden.

3. Übertragungssystem nach Anspruch 1, dadurch gekennzeichnet, daß die Verbindungsstangen aus Kunststoff, Stahl oder möglichst Sintermetall bestehen und vorzugsweise als gerade, zylindrische Verbindungsstangen (18) ausgebildet sind, wobei ihre gegenüberliegenden Endbereiche quer verlaufende, zylindrische Bohrungen (24) aufweisen, die vorzugsweise zueinander parallel verlaufen.

4. Übertragungssystem nach Anspruch 1, dadurch gekennzeichnet, daß die Schließstifte aus Kunststoff, Stahl oder möglichst Sintermetall bestehen und vorzugsweise als gerade, zylindrische Schließstifte (22) ausgebildet sind.

5. Übertragungssystem nach Anspruch 1, dadurch gekennzeichnet, daß die Lagem (26) aus Kunststoff, Stahl oder möglichst Sintermetall bestehen und mit einer äußeren, sphärischen Fläche (28) versehen sind, die in die sphärisch geformten Verbindungsglieder (20) paßt, mit einer zentralen Bohrung (32), die in der sphärischen Oberfläche (28) ausgebildet ist, die die Verbindungsstangen (18) aufnimmt und mit einer quer verlaufenden Ausnehmung (34) für die Schließstifte (22), die auf einer Rückseite in Bezug auf die Bohrung (32) ausgebildet ist.

## Revendications

1. Système de transmission à maillons et rotules comportant une ou plusieurs roues (2) d'entraînement et/ou de renvoi présentant un cercle périphérique d'évidements concaves (14) qui ont principalement la forme d'hémisphères et, coopérant avec elles, une chaîne sans fin (12) d'éléments à maillons creux (16), de forme sphérique, en matière plastique, produits par soudages successifs, les uns aux autres, d'éléments à maillons creux de forme hémisphérique, et reliés individuellement aux moyens de tiges (18) de liaison dont des parties extrêmes opposées sont encastrées de façon pivotante dans les éléments à maillons creux (16), caractérisé en ce que les éléments à maillons creux (20), avant le soudage, ont été reliés de façon pivotante auxdites tiges (18) de liaison à l'aide de moyens à goupilles (22) de blocage coopérant avec des moyens à paliers (26), et en ce qu'au moins l'un desdits éléments à maillons (20) de forme hémisphérique est formé de façon à présenter une ouverture latérale (40).

2. Système de transmission selon la revendication 1, caractérisé en ce que lesdits éléments à maillons creux (20), de forme hémisphérique, sont formés de façon à comporter, opposé à une ouverture centrale (30) pour lesdites tiges (18) de liaison, une arête à rebord circonférentielle (36) faisant saillie qui est en retrait de la face extérieure de la coque hémisphérique, et qui est avantageusement à fleur avec l'intérieur de la coque hémisphérique, l'arête à rebord étant destinée à fondre lors du soudage entre eux de deux éléments à maillons (20) de forme hémisphérique au moyen d'une plaque chauffée de soudage.

3. Système de transmission selon la revendication 1, caractérisé en ce que lesdites tiges de liaison sont réalisées en matière plastique, en acier ou, le cas échéant, en métal fritté et sont avantageusement configurées en tiges de liaison cylindriques droites (18) dont des parties extrêmes opposées sont formées de façon à présenter des alésages cylindriques transversaux (24) qui sont avantageusement parallèles entre eux.

4. Système de transmission selon la revendication 1, caractérisé en ce que lesdits moyens à goupilles de blocage sont réalisés en matière plastique, en acier ou, le cas échéant, en métal fritté et sont avantageusement réalisés sous la forme de goupilles cylindriques droites (22) de blocage.

5. Système de transmission selon la revendication 1, caractérisé en ce que lesdits moyens à paliers (26) sont réalisés en matière plastique, en acier ou, le cas échéant, en métal fritté et sont façonnés de façon à présenter une surface sphérique extérieure (28) qui s'ajuste à l'intérieur des éléments à maillons (20) de forme sphérique, avec un alésage central (32) formé dans la surface sphérique (28), qui s'ajuste auxdites tiges (18) de liaison et avec un évidement transversal (34) pour lesdits moyens à goupilles de blocage (22), formés à un côté arrière par rapport à l'alésage (32).
